# EUROPÄISCHE PATENTANMELDUNG

(11) **EP 2 047 899 A1**
(43) Veröffentlichungstag der Anmeldung: **15.04.2009**
(21) Anmeldenummer: 07017298.6
(22) Anmeldetag: 02.05.2001
(51) Int. Cl.: B01D 71/68, B01D 71/52, B01D 67/00, B01D 71/82

(54) **Organisch-anorganische Membranen**

(30) Priorität: 02.05.2000 DE 10021104
(62) Teilanmeldung aus: 01929612.8
(71) Anmelder: Häring, Thomas, 70619 Stuttgart (DE); Universität Stuttgart Institut für Chemische Verfahrenstechnik, 70199 Stuttgart (DE)
(72) Erfinder: Kerres, Jochen Dr., 73760 Ostfildern (DE); Häring, Thomas, 70619 Stuttgart (DE)

(57) **Zusammenfassung**

Gegenstand der Erfindung sind Organisch/anorganisch-Hybrid-Polymerblends und -Polymerblendmembranen, die zusammengesetzt sind aus:
• einem polymeren Säurehalogenid mit -SO₂X-, -POX₂- oder -COX-Gruppen (X=F, Cl, Br, I)
• einem Element- oder Metall-oxid- oder -Hydroxid, das erhalten wurde durch die Hydrolyse und/oder Sol-Gel-Reaktion einer element- und/oder metallorganischen Verbindung während des Membranbildungsprozesses und/oder durch eine Nachbehandlung der Membran in wässrigen sauren, alkalischen oder neutralen Elektrolyten.

Gegenstand dieser Erfindung sind außerdem Hybrid-Blends und -Blendmembranen, die Polymere enthalten, welche SO₃H-, PO₃H₂- und/oder COOH-Gruppen tragen, die durch wässrige, alkalische oder saure Hydrolyse der in dem Polymerblend oder der Polymerblendmembran enthaltenen polymeren Säurehalogenid erhalten werden.

Gegenstand dieser Erfindung sind außerdem Verfahren zur Herstellung dieser Hybrid-Blends und -Blendmembranen.

## Beschreibung

### 1. Gegenstand der Erfindung

Gegenstand der Erfindung sind Organisch/anorganisch-Hybrid-Polymerblends und - Polymerblendmembranen, die zusammengesetzt sind aus:
- einem polymeren Säurehalogenid mit -SO₂X-, -POX₂- oder -COX-Gruppen (X=F, Cl, Br, I)
- einem Element- oder Metall-oxid- oder -Hydroxid, das erhalten wurde durch die Hydrolyse und/oder Sol-Gel-Reaktion einer element- und/oder metallorganischen Verbindung während des Membranbildungsprozesses und/oder durch eine Nachbehandlung der Membran in wässrigen sauren, alkalischen oder neutralen Elektrolyten.

Gegenstand dieser Erfindung sind außerdem Hybrid-Blends und -Blendmembranen, die Polymere enthalten, welche SO₃H-, PO₃H₂- und/oder COOH-Gruppen tragen, die durch wässrige, alkalische oder saure Hydrolyse der in dem Polymerblend oder der Polymerblendmembran enthaltenen polymeren Säurehalogenide erhalten werden.

Gegenstand dieser Erfindung sind außerdem Verfahren zur Herstellung dieser Hybrid-Blends und -Blendmembranen.

### 2. Stand der Technik und seine Nachteile

Der Stand der Technik bei Säurechlorid-/anorganischen Hybrid-Composites ist in folgendem Artikel dargelegt:
Nafion-Sulfonylfluorid-Precursormembranen werden in Perfluorohydrophenanthren vorgequollen und in 3-Aminopropyltriethoxysilan eingelegt. Danach wird überschüssiges Silan mit EtOH ausgewaschen. Es entstehen Hybride, bei denen durch Hydrolyse des Silans und durch Reaktion des Silans mit den SO₂F-Gruppen partiell mit dem Polymer vernetzte SiO₂-Netzwerke in der Membranmatrix entstehen¹.
¹ Chemical modification of a nafion sulfonyl fluoride percursor via in situ sol-gel reactions A. J. Greso, ,R. B. Moore, K. M. Cable, W. L. Jarrett, K. A. Mauritz Polymer38, 1345-1356 (1997)

Nachteil des beschriebenen Systems ist, dass die Sol-Gel-Reaktion in einer vorgeformten Membran stattfindet und mithin der Gehalt des Polymer-Composits an durch die Hydrolyse erzeugter anorganischer Polymerphase nicht nach Wunsch eingestellt werden kann. Auch Hybrid-Systeme aus nichtionischen Polymeren und Metall-bzw. Elementoxiden wurden in der Literatur beschrieben:
(e) Composites aus Poly(n-Butylmemacrylat) und Titanoxid, hergestellt durch Wasserdampf-Hydrolyse von Titanalkoxiden, die in alkoholischen Lösungen einer Poly(n-Butylmethacrylat)-Polymerlösung hinzugefügt worden waren, in der Polymermatrix nach Abdampfung des Lösungsmittels²
(f) Compositmembranen aus Polyetherimid und nano-dispergiertem Siliciumoxid, hergestellt durch Hydrolyse von TEOS in Lösungen von Polyetherimid Ultem® in NMP durch Addition von 0.15 M HCl-Lösung. Nach Hydrolyse wurden dichte oder Phaseninversionsmembranen aus dieser Polymerlösung hergestellt. Kompatibilisierung der anorganischen mit der organischen Phase konnte erzielt werden durch zusätzliche Addition von 3-Aminopropyltrimethoxysilan (AS)³.
² Novel Poly(n-Butyl Methacrylate)/Titanium Oxide Alloys Produced by the Sol-Gel process for Titanium Alkoxides K. A. Mauritz, C. K. Jones J. AppL Polym. Sci. 40,1401-1420 (1990
³ Membranes of poly(ether imide) and nanodispersed silica S. P. Nunes, K. V. Peinemann, K, Ohlrogge, A. Alpers, M. Keller, A. T. N. Pires J. Memb. Sci. 157 (1999) 219-226

### 3. Aufgabe der Erfindung

Aufgabe der Erfindung ist es, Composites und Compositemembranen aus polymeren Säurehalogeniden bereitzustellen, die zusätzlich eine anorganische Element/Metall-Oxid/Hydroxid-Phase enthalten, welche folgende Membraneigenschaften verbessert:
- mechanische Stabilität
- thermische Stabilität
- verbesserte Wasserhaltefähigkeit auch bei Temperaturen von •100°C, was insbesondere für die Anwendung in Membranbrennstoffzellen im Temperaturbereich von >100°C wichtig ist.

Beim erfindungsgemäßen Verfahren werden organische Vorstufen der Element/Metall-Oxid/Hydroxide in die Polymerlösung eingebracht (Alkoxide/Ester, Acetylacetonate etc).

Die Ausbildung der anorganischen Phase im Ionomer erfolgt nach der Membranbildung durch Hydrolyse in saurem, basischem und/oder neutralem wässrigem Milieu, wobei gegebenenfalls gleichzeitig oder in einem weiteren Arbeitsschritt die polymeren Säurehalogenidgruppen zu Säuregruppen hydrolysiert werden können.

### 4. Mit der Erfindung gelöste Aufgabe (Erfindungsbeschreibung)

Es wurde überraschend festgestellt, daß, wenn man Zirkon(IV)propylat 70 Gew.% in 1-Propanol Zr(OCH₂CH₂CH₃)₄ in Lösungen von PSU-Sulfochlorid in Tetrahydrofuran einbringt, das Zirkon(IV)propylat nicht in der Polymerlösung hydrolysiert oder einen schwerlöslichen Komplex bildet, sondern bei der Abdampfung des Lösungsmittel in die Membranmatrix eingebaut wird. Würde man die Zirkon(IV)propylat-Propanol-Lösung mit einer Lösung von PSU-Sulfochlorid (oder PSU-Sulfonsäure oder PSU-Sulfonsäuresalz) in einem dipolar-aprotischen Lösungsmittel wie N-Methylpyrrolidinon mischen, würde das Zirkon(N)propylat sofort hydrolysieren oder ausfallen.

Es wurde überraschend festgestellt, daß man die organische Zr-Verbindung durch sukzessive Nachbehandlung der Membran in wässriger Lauge und/oder Wasser und/oder Säure zu nanodispers in der Membranmatrix verteiltem Zirkondioxid bzw. Zirkonoxid-hydroxid hydrolysieren kann. Die anorganische Zirkonverbindung kann durch EDX in der Membranmatrix nachgewiesen werden. Auch andere metallorganische Verbindungen wie Ti(acac)₂(OiPr)₂ lassen sich mit PSU-Sulfochloridlösungen in Etherlösungsmitteln ohne Hydrolyse in der Polymerlösung mischen und bei Abdampfung des Lösungsmittels in die Membranmatrix einbauen.

Nachfolgende erfindungsgemäße Composite sind herstellbar. Composit mit
- mindestens einem polymeren Säurehalogenid mit -SO₂Cl-, -POCl₂- oder -COCl-Gruppen, vorzugsweise mit einem Arylhauptkettenpolymer-Rürkgrat und
- mindestens einem Element- oder Metall-oxid- oder -Hydroxid, das erhalten wurde durch die Hydrolyse folgender Klassen von element- und/oder metallorganischen Verbindungen:
   - Metall/Element-Alkoxide/Ester von Ti, Zr, Sn, Si, B, Al
   - Metallacetylacetonate, z. B. Ti(acac)₄, Zr(acac)₄
   - Mischverbindungen aus Metall/Element-Alkoxiden und Metallacetylacetonaten, z. B. Ti(acac)₂(OiPr)₂ etc.
   - organischen Aminoverbindungen von Ti, Zr, Sn, Si, B, Al
während des Membranbildungsprozesses und/oder durch eine Nachbehandlung der Membran in wässrigen sauren, alkalischen oder neutralen Elektrolyten. Durch den gleichen Nachbehaudlungsschritt oder durch einen weiteren wässrigen sauren, alkalischen oder neutralen Nachbehandlungsschritt können dabei gegebenenfalls auch die Säurehalogenidgruppen zu den entsprechenden Säuregruppierungen hydrolysiert werden, so daß Ionomer(blend)membranen mit einer zusätzlichen, nanodispers verteilten anorganischen Phase erhalten werden.

Durch die nanodispers in der Membranmatrix verteilte, erfindungsgemäß eingebrachte anorganische Phase wird das Eigenschaftsprofil von Säurehalogenidpolymer(blends) oder protonenleitenden Ionomer(blends) und Ionomer(blend)membranen nachhaltig verändert. Die Protonenleitfähigkeit steigt während die Quellung nicht im entsprechenden Maße, wie sonst üblich zunimmt.

Abhängig vom Gehalt und von der Art der nanodispersen Komponente verändert sich die Permselektivität der Membranen auch für nichtionische permitierende Moleküle (z.B. Gase). Erfolgt die Hydrolyse in Phosphorsäure oder erfolgt nach der Hydrolyse eine weitere Nachbehandlung der Membranen mit Phosphorsäure, so werden in der Membranmatrix die entsprechenden Metall- oder Elementphosphate oder -hydrogenphosphate oder - dihydrogenphosphate generiert, die ihrerseits wieder zur Protonenleitfähigkeit beitragen.

### 5. Ausführungsbeispiele

### 5.1 Herstellung der Ionomerblendmembran TH785

0,5 g PSU-Sulfochlorid mit etwa 1 Sulfochloridgruppe pro Wiederholungseinheit wird in 3 g THF gelöst. Danach werden 0,5307 g einer 70 Gew%igen Lösung von Zirkon(IV)propylat) in 1-Propanol zugegeben. Die Lösung wird entgast, und danach in eine Petrischale gegossen. Man läßt das Lösungsmittel bei Raumtemperatur über Nacht abdampfen. Danach wird die gebildete Membran folgendermaßen nachbehandelt:
(1) in 10% NaOH bei 80°C für 24 h
(2) in 10% Schwefelsäure bei 80°C für 24 h
(3) in Wasser bei 85°C für 16 h

### Charakerisierungsergebnisse:

| | |
|---|---|
| IEC [meq SO₃H/g]: | 0,77 |
| Quellung [%]: | 30,9 |
| Rₛₚ^{H+} (0,5 N HCl) [Ω cm]: | 28,9 |

### 5.2 Herstellung der Ionomerblendmembran TH782

0,5 g PSU-Sulfochlorid mit etwa 1 Sulfochloridgruppe pro Wiederholungseinheit wird in 2,5 g THF gelöst. Danach werden 0,8817 g einer 75 Gew%igen Lösung von Titan(IV)-bisacetylacetonato)-diisopropylat in 2-Propanol zugegeben. Die Lösung wird entgast, und danach in eine Petrischale gegossen. Man läßt das Lösungsmittel bei Raumtemperatur über Nacht abdampfen. Danach wird die gebildete Membran folgendermaßen nachbehandelt:
(1) in 10% NaOH bei 80°C für 24 h
(2) in 10% Schwefelsäure bei 80°C für 24 h
(3) in Wasser bei 85°C für 16 h

### Charakerisierungsergebnisse:

| | |
|---|---|
| IEC [meq SO₃H/g]: | 0,81 |
| Quellung [%]: | 39,4 |
| Rₛₚ^{H+} (0,5 N HCl) [Ω cm]: | 12 |

### 6. Neuheit der Erfindung

Die erfindungsgemäßen neuen Anorganisch/Organisch-Hybrid-Ionomer(blend)membranen und das Verfahren zur Herstellung derselben sind bisher in der Literatur nach meinem Wissen nicht beschrieben worden, weder durch eigene noch durch fremde Publikationen.

### 7. Vorteile der Erfindung

Die erfindungsgemäßen neuen Anorganisch/Organisch-Hybridmembranen weisen ein hervorragendes Eigenschaftsprofil auf:
- gute Protonenleitfähigkeit
- gute thermische Stabilität
- gute mechanische Stabilität.
- limitierte Quellung.

Einige erfindungsgemäße Membranen zeigen, verursacht durch das anorganische Oxid/Hydroxid in der Membranmatrix, eine verbesserte Wasserhaltefähigkeit insbesondere bei T>80°C. Es wird vermutet, dass die nanodisperse Verteilung der anorganischen Komponente in der Membran die Ursache dafür ist. Durch Einmischung von Oxidpulvern in Ionomermembranen, wie bereits in einigen Publikationen vorgeschlagen wurde⁴, läßt sich keine so feine Verteilung der anorganischen Komponente in der Membranmatrix erreichen wie beim erfindungsgemäßen Verfahren, bei dem die element/metallorganischen Verbindungen erst in der Membranmatrix zum Oxid bzw. (hydrogen)Phosphat hydrolysiert werden. Je nach spezifischer Zusammensetzung zeigen die erfindungsgemäßen Membranen noch weitere Vorteile:
- erniedrigte Methanolpermeabilität
- Beitrag zur Protonenleitung, insbesondere bei T>80°C
- veränderte Permselektivität, sowohl für geladene als auch ungeladene Teilchen
- die Membranen sind photochemisch aktiv, besonders die mit nanodispersem Titandioxid.
- spezielle Zusammensetzungen (mit Titandioxid) zeigen photolumineszens
⁴ Comparison of Ethanol and Methanol Oxidation in a Liquid-Feed Solid Polymer Electrolyte Fuel Cell at High Temperature A. S. Arico, P. Creti, P. L. Antonucci, V. Antonucci Electrochem. Sol. St Lett. 182) 66-68 (1998)

### 8. Schlagworte

Arylhauptkettenpolymere
Sol-Gel Prozess
Hydrolyse
Metall- und Elementalkoxide von Ti, Zr, Sn, Si, B, Al
Metall- und Elementacetylacetonate Ti(acac)₄, Zr(acac)₄
Mischverbindungen aus Metall/Element-Alkoxiden und Metallacetylacetonaten
Ti(acac)₂(OiPr)₂
organischen Aminoverbindungen von Ti, Zr, Sn, Si, B, Al
Elementoxide
Metalloxide
Elementhydroxide
Metallhydroxide
wasserhaltige Oxide
wasserhaltige Phophate
Wasserhaltefähigkeit
Protonenleitfähigkeit
Polysulfon Udel®
Polyetheretherketon Victrex®
polymere Säurehalogenide
Kationenaustauscherpolymere
Kationenaustauscherpolymermembranen
polymerer Protonenleiter
Eigenprotonenleitfähigkeit
Membranbrennstoffzellen
H₂-Brennstoffzellen
Direktmethanol-Brennstoffzellen
Membranen
Membranverfahren
Anwendungstemperatur >80°C
thermische Stabilität

## Patentansprüche

1. Komposite und Kompositmembranen, umfassend (A) wenigstens ein polymeres Säurehalogenid, **dadurch gekennzeichnet, dass** das Polymer ein Arylhauptkettenpolymer, ausgewählt aus der Gruppe der Polyethersulfone, Polysulfone, Polyphenylsulfone, Polyetherethersulfone, Polyetherketone, Polyetheretherketone, Polyphenylenether, Polydiphenylphenylenether, Polyphenylensulfide oder ein Copolymer, das mindestens eine dieser Komponenten enthält, ist und SO₂X-, POX₂-, COX- oder BX₂-Gruppen, wobei X die Bedeutung F, Cl, Br oder I hat,
und
(B) ein(e) nanodispers verteilte(s,r)
Salz,
Metall/Element-Alkoxid/Ester von Ti, Zr, Sn, Si, B, Al,
Metallacetylacetonat, z. B. Ti(acac)₄, Zr(acac)₄,
Mischverbindung aus Metall/Element-Alkoxid,
Metallacetylacetonat, z. B. Ti(acac)₂(OiPr)₂ etc.
und/oder
organische Aminoverbindung von Ti, Zr, Sn, Si, B, Al,
die erhalten wurden durch Auflösen der Komponenten (A) und (B) in einem dipolar-aprotischen oder einem Etherlösungmittel mit nachfolgender Formgebung zu einem Komposit oder einem dünnen Film und gefolgt von einer Abdampfung des Lösungsmittels.

2. Komposit und Kompositmembranen nach Anspruch 1, **dadurch gekennzeichnet, dass**
(A) die SO₂X-, POX₂-, COX- oder BX₂-Gruppen, wobei X die Bedeutung F, Cl, Br oder I hat, des Membranpolymers durch eine nach der Membranbildung erfolgte Hydrolysereaktion in SO₃Y-, PO₃Y₂-, COOY- oder B(OY)₂-Gruppen, wobei Y die Bedeutung H, ein- oder zweiwertiges Metallkation, Ammoniumion, Imidazoliumion, Pyrazoliumion, Pyridiniumion hat, umgewandelt werden
und
(B) zusätzlich in der Membran ebenfalls durch Hydrolyse wenigstens Metalloxide und/oder Metallhydroxide und/oder Metalloxidhydroxide vorliegen, wobei die ein- oder zweiwertigen Metallkationen von (A) verschieden sind von den zugrunde liegenden Metallkationen aus (B).

3. Komposite und Membranen nach 1 oder 2, **dadurch gekennzeichnet, daß** sie noch zusätzlich kovalent vernetzt sind.

4. Komposite und Kompositmembran nach einem oder mehreren der Ansprüche 1 bis 3, **dadurch gekennzeichnet, daß** sie Elementphosphate und/oder -hydrogenphosphate und/oder -dihydrogenphosphate enthält, die erhalten wurden durch eine Nachbehandlung der Membran, erhalten nach einem der Ansprüche 1 bis 3, mit Phosphorsäure.

5. Verfahren zur Herstellung von Membranen nach einem oder mehreren der Ansprüche 1 bis 4 **dadurch gekennzeichnet, daß** man folgende Komponenten in einem dipolar-aprotischen Lösungsmittel wie N-Methylpyrrolidinon (NMP), N,N-Dimethylacetamid (DMAc), N,N-Dimethylformamid (DMF), Dimethylsulfoxid (DMSO) oder Sulfolan oder in einem Etherlösungsmittel wie Tetrahydrofuran, Dioxan, Glyme, Diglyme, Triglyme etc. zusammenmischt: ein polymeres Säurehalogenid mit SO₂X-, POX₂-, COX- oder BX₂-Gruppen, wobei X die Bedeutung F, Cl, Br oder I hat, und mindestens metall- oder elementorganische Verbindungen gemäß der Verbindungen aus Anspruch 1.

6. Verfahren nach Anspruch 5, **dadurch gekennzeichnet, daß** man aus der Polymerlösung aus Anspruch 5 dünne Filme auf einer Unterlage (Glas- oder Metallplatte, Gewebe, Vlies, poröse (Polymer)membran) zieht, das Lösungsmittel bei Temperaturen von 25 bis 150°C bei Normaldruck oder im Vakuum abdampft, und den gebildeten dünnen Film folgendermaßen nachbehandelt, wobei die Reihenfolge der Nachbehandlungsschritte variieren und auch ggf. die Schritte (1) und/oder (2) und/oder (3) weggelassen werden können:
(1) in Wasser bei T=50 bis 100°C
(2) in 1 bis 100%iger Mineralsäure (Halogenwasserstoffsäure, Schwefelsäure, Phosphorsäure) bei T=50 bis 100°C
(3) in 1 bis 50%iger wässriger Lauge (z. B. Ammoniaklösung, Aminlösung, Natronlauge, Kalilauge, Natriumcarbonatlösung, Calciumhydroxidlösung, Bariumhydroxidlösung) oder in einem wasserfreien flüssigen Amin oder Gemisch verschiedener Amine
(4) in Wasser bei T=50 bis 100°C.

7. Komposit und Kompositmembran nach einem der vorangehenden Verfahren.

8. Verwendung der Membranen nach Anspruch 1,4 und/oder 6 zur Gewinnung von Energie auf elektro-chemischem oder photo-chemischem Weg.

9. Verwendung der Membranen nach einem der vorhergehenden Ansprüche als Bestandteil von Membranbrennstoffzellen (H₂- oder Direktmethanol-Brennstoffzellen) bei Temperaturen von 0 bis 180°C, in elektrochemischen Zellen, in sekundären Batterien, Elektrolysezellen, Membrantrennprozessen wie Gastrennung, Pervaporation, Perstraktion, Umkehrosmose, Elektrodialyse, und Diffusionsdialyse.
